# EUROPEAN PATENT SPECIFICATION

(11) **EP 1 356 420 B1**
(45) Date of publication and mention of the grant of the patent: **11.10.2006**
(21) Application number: 02713358.6
(22) Date of filing: 04.01.2002
(51) Int. Cl.: G06K 9/34, G01N 33/543, G01N 21/76, G06K 9/60

(54) **DEVICES AND METHODS TO IMAGE OBJECTS**
EINRICHTUNGEN UND VERFAHREN FÜR BILDOBJEKTE
DISPOSITIFS ET PROCEDES DE MISE EN IMAGES D'OBJETS

(30) Priority: 05.01.2001 US 259959 P
(43) Date of publication of application: 29.10.2003
(73) Proprietor: IMMUNIVEST CORPORATION, Wilmington, DE 19899 (US)
(72) Inventor: TIBBE, Arjan, NL-7413 ZN Deventer (NL); DE GROOTH, Barth, deceased (NL); GREVE, Jan, NL-7576 ER Oldenzaal (NL); TERSTAPPEN, Leon, Huntingdon valley, PA 19006 (US)
(74) Representative: Hanson, William Bennett
(86) International application number: PCT/US2002/000203
(87) International publication number: WO 2002/054339

(56) References cited:
- WO-A-00/32293
- WO-A-00/62247
- WO-A-98/43067
- DE-A- 19 938 839
- US-A- 5 340 749
- US-A- 5 428 451
- US-A- 5 876 593
- US-A- 5 985 153
- US-A- 6 136 182

## Description

### Technical Field

This invention relates generally to devices and methods to obtain to scan and obtain images of objects, and more particularly to images reconstructed from partial sub-images of object such as cells obtained from biological fluids that are distributed in a two-dimensional plane. The scanning and imaging technique provided by the invention is especially advantageous for the imaging of cells that are aligned by magnetic means and examined by digitized optoelectronic means.

### Background of the Invention

The invention of microscopy by Antoni van Leeuwenhoek in 1674 has enabled the visualization of microscopic entities such as cells. The introduction of dyes that stained different components of cells by Paul Ehrlich some two hundred years later in combination with light microscopy can be considered as the first step in the new era of cell analysis. Improvements in cell labeling technology and instrumentation that can identify and differentiate the differentially labeled cells have significantly improved our ability to explore the world of cell biology. In the last 25 years automated blood cell counters have replaced manual examination of cytochemically stained blood smears. Criteria used for cell classification by morphometric means involved parameters such as nuclear to cytoplasmic ratio, cell and nuclear size and shape, the number and size of cytoplasmic granules. As cells gradually change their morphological appearance during maturation, it introduces more uncertainty in substantial inter-observer variations in the assignation of the cells. Morphological changes associated with malignancies can be associated with cellular appearance during maturational processes and abnormal frequencies of atypical cells are often used as criteria for assigning such cells as malignant.

Improvements in cell classification have come from identification based on immunophenotype. Early techniques such as formation of rosettes of sheep erythrocytes around T-lymphocytes have been replaced by flow cytometric analysis of cells labeled with fluorescent antibodies recognizing specific cell surface or intracellular antigens. Multi-parametric flow cytometry analysis has significantly improved the ability to enumerate and classify detected events on the basis of size and staining characteristics, but does not further discriminate detected events, for example, as cells by morphometric means. Present methods and devices using these principles are relied upon to diagnose and classify a variety of diseases such as leukemias and lymphomas, or to follow the progression of diseases such as AIDS. As technology improved, more information was obtained which in return lead to greater demands for expanding the sensitivity and specificity of detection methods for rare target species. An example of an application in need of further improvement is the identification and enumeration of circulating carcinoma cells of epithelial origin in the blood of cancer patients that may be present at frequencies of less than one carcinoma cell per ml of blood. Using a combination of epithelial cell enrichment by magnetic means in combination with analysis by multi-parametric flow cytometry, significant differences in the number of "circulating tumor cells" were found between healthy individuals and patients with breast cancer (Racila et al., Proc. Nat. Acad. Sci. 95, 4589-4594, 1998). In several studies, such "circulating tumor cells" (CTC) were defined as events expressing the following characteristics: positive for the epithelial cell marker cytokeratin, negative for the leukocyte marker CD45, positive staining with a nucleic acid dye, and light scattering properties that are compatible with cells. However, morphometric confirmations of the detected events as cells and further molecular evidence is lacking in flow cytometric methods, but is clearly needed to assure that the detected rare events are indeed tumor cells derived from a primary tumor. Automated image analysis systems have been introduced to reduce subjective errors in cell classification between different operators in manual methods, but such prior art systems without preliminary cell enrichment steps still inherently lack sensitivity. Several automated cell imaging systems have been described or are commercially available for cell analysis. The system developed by Chromavision, ACIS0^{™} or Automated Cellular Imaging System (Douglass et al., US patent 6,151,405) uses colorimetric pattern recognition by microscopic examination of prepared cells by size, shape, hue and staining intensity as observed by an automated computer controlled microscope and/or by visual examination by a health care professional. The system uses examination of cells on microscope slides and was designed for tissue sections. The SlideScan^{™} or MDS^{™} systems of Applied Imaging Corp. (Saunders et al., US patent 5,432,054) is described as an automated, intelligent microscope and imaging system that detects cells or "objects" by color, intensity, size, pattern and shape followed by visual identification and classification. In contrast to the ACIS system this system has the ability to detect fluorescent labels which provides more capability.

US-A-5 428 451 discloses a method and an apparatus in which particles in a sample fluid are counted by passing the fluid through an optical cell which preferably has the form of a magnetic particle separation device. An image of the particles is projected via an optical lens system onto a CCD array. Signals from the individual CCDs are processed by a computer to provide information concerning the number of the particles passing through the optical cell. The device according to this reference does not have a camera which is movable relative to the sample chamber and does not have an encoder capable of reading the x-y position of the target entities.

However, these and other currently available methodologies are not sufficiently sensitive for accurate classification and typing of rare events such as circulating tumor cells in blood. Accordingly, the present invention seeks to improve upon the aforementioned methodologies, and to provide simple and efficient means and methods for automated imaging of objects that can be used, for example, in conjunction with high sensitivity immunophenotyping, to permit detection, enumeration and accurate classification of rare target species, such as CTC in blood or other fluids.

### Summary of the Invention

This invention provides devices and methods that permit the application of novel imaging capabilities to such systems as the Cell Tracks^{™} cell analysis system as described by Tibbe et al. (Nature Biotech. 17, 1210-13, 1999). The devices and methods described by Tibbe and in the disclosure of this invention can also be applied to other target objects. However, the primary application is rapid immunomagnetic selection of rare cells from blood followed by automated alignment of the isolated cells and automated image analysis. Briefly, in a preferred embodiment of the invention, after magnetic collection and enrichment from blood, the magnetically labeled cells are aligned along ferromagnetic lines of nickel (Ni) and are scanned by a laser focused by means of a conventional objective lens such as from a compact disk player. Since the cells have been selectively stained with one or more fluorescent labels, the measured fluorescence emissions and the intensities can be used to identify or classify the cell type.
No liquid flow system is required by the system of the present invention. The magnetic fields induced by the angular magnets in proximity of the nickel lines keep the magnetically labeled cells in fixed positions. This allows revisiting the detected events after measuring the fluorescence emissions and intensities for a more extensive analysis to further identify the detected events. One can microscopically view the images of such events and apply independent morphometric criteria to identify the events as actual cells. Accordingly, in accordance with the present invention, the novel scanning and imaging method provides an improved diagnostic system for detection, classification and enumeration of cells, which comprises an efficient automated means for collecting and aligning imunomagnetically labeled target cells from body fluids, and in which such collected cells also bear at least one immuno-specific fluorescent label that differentiates target from non-target cells labeled with different fluorescent label(s). The images of the collected and aligned cells are reconstructed from individual digitized sub-images and their x-y coordinates, thereby providing full combined images of the objects and allowing improved classification of the detected objects as target events.

In accordance with the present invention, the new laser scanning and imaging techniques were integrated into a system such as the Cell Tracks system to obtain high quality fluorescence images. The discoveries described and claimed herein have greatly improved the detection, enumeration and classification of rare cells over systems and methods in prior art. Efficient detection of cells at very low frequencies, so called rare events, requires minimal sample handling to avoid losses of cells. Furthermore, the volume from which the rare cells are separated and enriched should be as large as possible to increase the sensitivity of detection. With the development and application of the disclosed novel techniques, fluorescent images of specific events can now be obtained resulting in a highly accurate identification, thus making the inventive system a powerful tool for the detection of rare events in body fluids.

### Brief Description of the Drawings

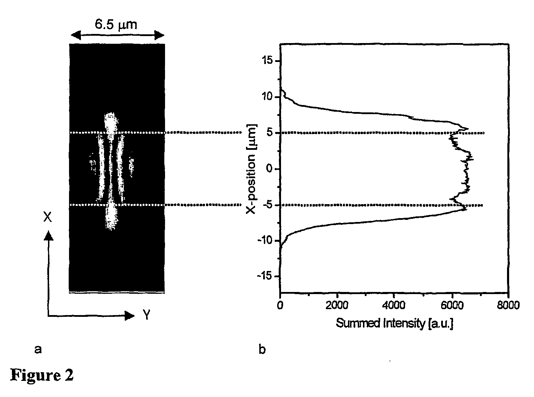

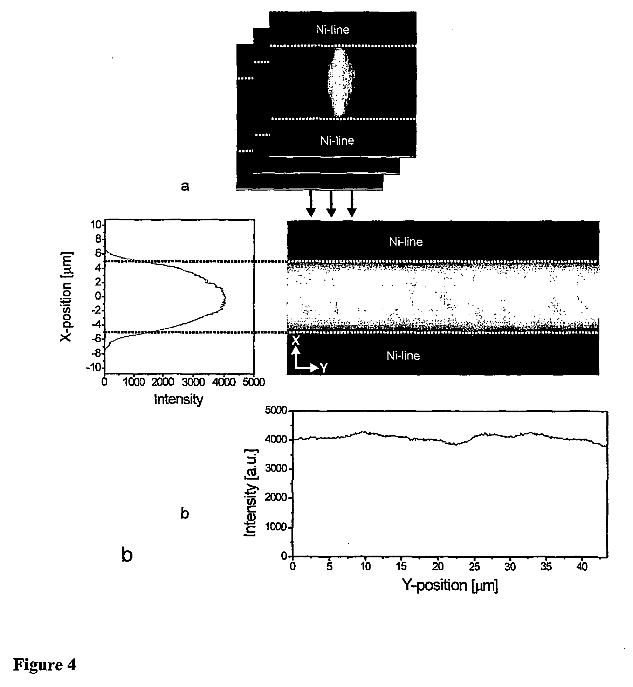

Figure 1
   Schematic representation of the Cell Tracks system which utilizes a preferred embodiment of the invention. The components important for imaging are shown in bold face.
Figure 2
   a) Image of the illuminating focal spot as it is used for scanning the cells; short axis is 4 µm and long axis is 15 µm. The dotted lines indicate the position of the Ni lines. b) A graph showing the summed pixel intensities in the x-direction depicted in Fig. 2a.
Figure 3
   A schematic representation of the image reconstruction method is shown. The detected events or cells are scanned with the laser by moving the stage that is equipped with an encoder. The CCD camera captures the individual sub-images and stores them in computer memory along with the corresponding encoder positions representing the x-y coordinates of the stage. After scanning is complete, the sub-images are combined to form a full reconstructed image of the object by using the encoder values, which are calculated back to the number of pixels that the subsequent sub-images should be shifted with respect to each other. Summation of the shifted sub-images gives the complete reconstructed fluorescent image of the cell.
Figure 4
   **a)** Fluorescent signals captured when a homogeneous layer of dye is scanned.
   **b)** Two graphs showing the sums of the fluorescent intensities in the x- and y-directions for the dye scanned in Fig. 4a.
Figure 5
   **a)** A graphical representation of the solid angle captured by the objective as a function of the position in the chamber. The numerical aperture (NA) of the compact disk (CD) objective in air is 0.45, resulting in an effective NA of 0.34 inside the chamber on the stage. This NA corresponds to a solid angle (□) of 0.37 sr. The spacing of the nickel lines is 10 µm. The circle represents an aligned object with a diameter of 7 µm. The effective collecting angle of two points is indicated in the figure.
   **b)** The graph shows the relative sum of the calculated solid angles of Figure 4a in the z-direction.
Figure 6
   **a)** Scatter plot of CD45 antibody-APC/Cy7 versus CAM5.2 antibody-APC fluorescence of SKBR3 cells spiked into whole blood, captured and aligned by EpCAM antibody-labeled magnetic nanoparticles. Some representative sub-images of the measured events of region 1, the SKBR3 cell region, and of the broad band containing the debris are shown. Region 2 is the region where the leukocytes would appear, if present, and aligned along the Ni lines. b) Full image of an SKBR3 cell with its corresponding measured fluorescence signals.
Figure 7
   Scatter plot of Oxazine 750 fluorescence versus CD4-APC fluorescence of white blood cells in whole blood captured and aligned by CD45-labeled magnetic nanoparticles. Some representative images of the monocyte and granulocyte regions are shown.
Figure 8
   Time resolved imaging of Oxazine 750 stained CD45 ferrofluid captured leukocytes in whole blood utilizing the Cell Tracks system: time span is 0 to 120 sec at 20 sec intervals.

### DETAILED DESCRIPTION OF THE INVENTION

The invention will now be further described in reference to preferred embodiments in the following description:

### Positional information:

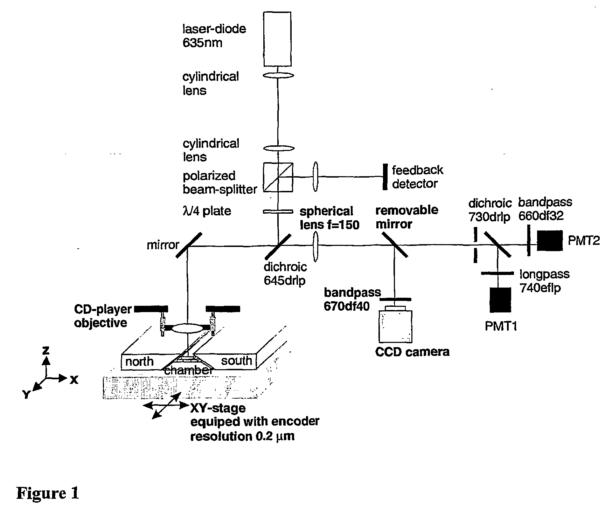

Referring again to Figure 1, before a full image of a previous measured event can be made, wherein a full image is defined as a reconstructed image consisting of combined multiple digitized sub-images, the event must be re-located on the sample chamber in Figure 1, for which spatial information as x-y sample coordinates for each sub-image is needed. To obtain positional information in the y-direction, the stage, which moves both the magnets and sample chamber, has been equipped with an encoder that has a resolution of 0.2 um. The line number for a sub-image of a specific event is measured to give positional information in the x-direction. The encoder signals together with the line number are stored in memory and are coupled to the measured PMT signals for each sub-image. In this manner, all the measured sub-image events have been associated with and indexed to an x-y-position for the sample.

To go back to the position where a specific event or sub-image was measured, the laser focus is shifted by a number of lines equal to the current line number minus the line number on which the specific event was measured. Concurrently, the stage moves in the y-direction to the specific encoder position. An alternative method to obtain encoder signals is to add profiles to the Ni lines described below that provide signals to record the position. This approach further permits the use of a significantly simpler and cheaper stage to move the sample.

### Method of imaging:

The system shown in Figure 1 consists of a standard monochrome surveillance charge-coupled device (CCD) camera, frame rate 25Hz, and with manual gain adjustment. By inserting the removable mirror in to the light beam, the fluorescent light captured by the compact disk (CD) objective is focused by the spherical achromatic lens (f=150 mm) onto the CCD instead of the pinhole. The CD objective consists of a single aspherical lens that has been optimized to obtain a diffraction-limited spot size for a wavelength of 780 nm as used in the CD players. The NA of the lens is 0.45 and the lens diameter is 4 mm. An image of the focal spot, as it is used for scanning the cells, is presented in Figure 2a. The elliptical shape of the image is obtained with the two cylindrical lenses that are placed at a distance slightly larger than twice their individual focal lengths. The short axis of this elliptical focus is set at 4 µm (FWHM) which is smaller than the diameter of a cell to avoid that more than one cell can be in focus at any one time. The longer axis is larger than the Ni line spacing. The light focused on the Ni lines is reflected and used for feedback control. The Ni lines are present on a 0.5 mm thick glass substrate. Focusing the laser light (635nm) onto the Ni lines through the glass substrate with the CD-objective, which has not been optimized for this application, results in a non-homogeneous laser focus.

The intensity profile of the laser focus is not only non-homogeneous but, since the diameter of a cell is typically between 5 and 20µm, it is also smaller than the cell diameter. However, uniform illumination with a laser focus that is smaller than the cell diameter and that has an non-homogeneous intensity profile can be obtained by scanning the laser across the cell surface by moving an optical component in the beam, as is done in the laser scanning microscope (Corle, TR, Confocal Scanning Microscopy and Related Imaging Systems, Academic Press, NY, 1995). In the system of the present invention this method would result in a loss of feedback, which in turn would result in a loss of positional information in the x-direction. Figure 2b shows the intensity profile obtained after adding the individual pixel intensities of the focal spot image of Figure 2a in the y-direction. The dotted lines indicate a Ni line spacing of 10 µm. The summed intensity profile shows an intensity variation of ±6% across the line spacing. Moving a cell in the y-direction through this focus will have the result that every part of the cell has received an almost equal illumination after it has passed through the laser focus. This method is used to obtain a full high quality fluorescent image of an aligned cell based on summation of individual sub-images.

### Magnetic stage and chamber:

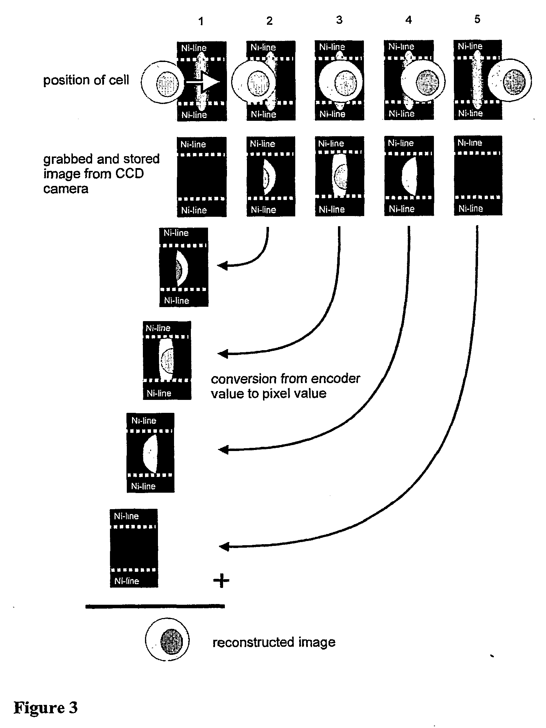

The magnets and chamber have already been positioned on a stage that moves the cells through the focus in the y-direction. To obtain a full image of a specific cell, the laser focus is shifted to the line where the specific sub-image event was measured and the stage is moved in the y-direction, with a speed of 10 mm/sec, to the corresponding encoder position. The stage is slowed down to a speed of 5 um/sec when the distance to the cell position is 25 microns. While moving the stage at this low constant speed in the y-direction, the cell is scanned by the laser focus, and the fluorescence signal for each sub-image is captured on the CCD (Fig. 3).

A frame grabber card captures the CCD sub-images at 25 Hz and these are stored in memory. In each subsequent sub-image, a different part of the cell is illuminated since the laser focus in the scan direction is smaller than the cell diameter. Together with the sub-image capture, the encoder position is read and both are stored in computer memory. A total of 40 microns is scanned corresponding to 200 captured sub-images each with 150 times 250 pixels, which are on the average 0.2 µm shifted with respect to each other. This corresponds to a shift of 2.63 pixels on the CCD surface. Using the encoder values the captured sub-images are shifted over a number of pixels corresponding to the difference in their associated encoder values x 2.63, which are then summed or combined. This results in a reconstructed full cell image as is schematically illustrated in Figure 3. The sub-image resolution in the y-direction is determined by the encoder resolution, which is 0.2 µm. The resolution in the x-direction is determined by the number of pixels in the image recorded in the x-direction and is 0.07µm per pixel. Both resolutions are smaller than the diffraction limit. Hence, it will be appreciated be those skilled in the art that the ultimate image resolution will not be determined by the encoder or the camera but by the imaging optics.

### Homogeneity of illumination:

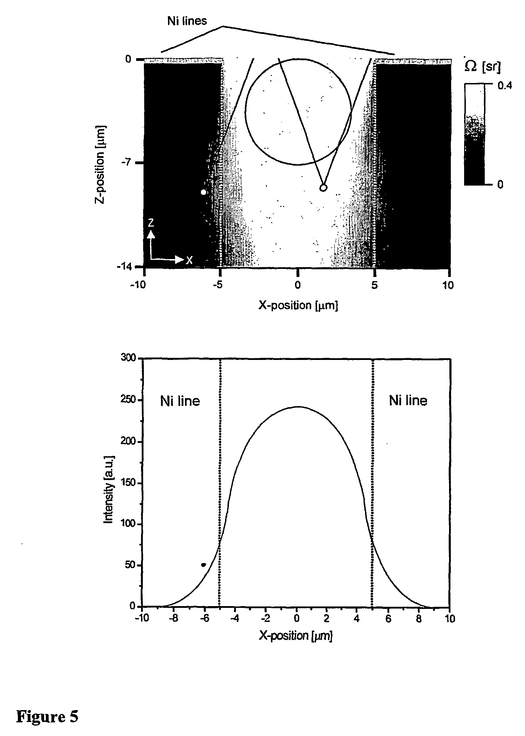

The homogeneity of illumination in the method of this invention was tested with a thin layer of a concentrated fluorescent dye solution that was placed in the plane where the magnetically labeled cells would be aligned between the Ni lines which are spaced 10 µm apart. The dye layer was scanned and imaged at a speed of 5 µm/sec as described above. The sequentially captured sub-images are presented in Figure 4a. For a uniform layer of fluorescent dye, one would expect a homogeneous fluorescent image, if the illumination were uniform. The obtained image is shown in Figure 4b. The observed signals, as measured in intensity units along the center trace in the y-direction of the image, were found to vary by + 7 %. One explanation for this variation may be non-homogeneity of the dye layer, which would affect the emitted and captured fluorescent light. A second explanation is that the stage did not move with a constant speed. The position of the stage is not synchronized with the frame rate of the camera and the frame grabber card, but images were grabbed at 25Hz regardless of the speed and position of the stage in the y-direction. If the stage moves faster than 5µm/sec in a certain region, fewer images would be captured of this region resulting in a lower total intensity. However, the variation in the speed of the stage was measured and turned out to be much smaller than the observed variation in the measured image intensity. The apparent non-uniformity along the center trace must therefore be due the non-homogeneity of the dye layer. The intensity profile in the x-direction or perpendicular to the Ni lines and scan direction is also presented in Figure 4b. The intensity of the sub-images in this direction have a maximum centered between the Ni lines and fall off near the edges of the Ni lines. The Ni lines obstruct the emitted fluorescent light resulting in a smaller collecting angle, which in turn results in a smaller effective NA of the objective. In Figure 5a, the effective solid angle detected by the objective is calculated as a function of the position in the chamber. The simulation was performed using a line spacing of 10 µm and a depth or layer thickness of 14 µm. The graph in Figure 5b shows the sum of the calculated solid angle values of Figure 5a in the z-direction, thus providing a measure of the collected and measured intensities as a function of the x-position. The observed calculated intensity profile is in agreement with the measured intensities for the uniform dye layer. The effective NA of objects close to the Ni lines is largely reduced resulting in a non-uniform captured intensity in the x-direction even though uniform illumination is used. Objects with a diameter smaller than 7 µm, as is indicated by the circle in Figure 5a, will be imaged without loss in intensity due to the shielding effect of the Ni lines, since the effective NA in this region is reduced by the Ni lines.

### Cell Imaging:

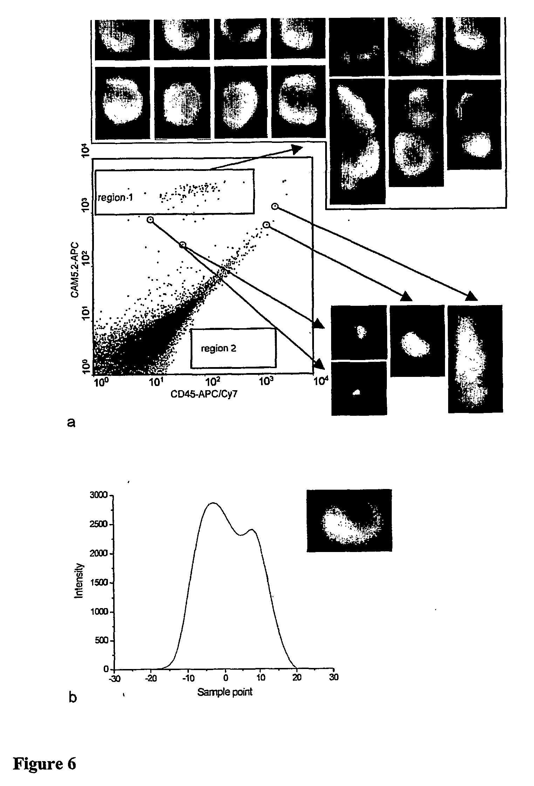

Racila et al. (Proc. Nat. Acad. Sci. 95, 4589-94,1998) described a method for separating breast carcinoma cells from blood using a sequence of steps including immunomagnetic labeling followed by immunophenotyping analysis in a flow cytometer. In the system of this invention, cells can be immunophenotyped and their identity confirmed by providing a fluorescence image. The procedure was tested by the detection of cultured cells of the breast cancer cell line, SKBR3, which were spiked into whole blood. The spiked sample was prepared as described in the Examples. Figure 6a shows the scatter plot of the APC/Cy7 channel versus the APC channel in flow cytometry. The SKBR3 cells are located in Region 1. Debris appears as the broad band and leukocytes, if present, are located in Region 2. After measuring the scatter plot, some of the events were imaged with the novel imaging technique disclosed herein. After selecting an object or cell in the scatter plot, the imaging system automatically goes back to the measured position of the cell and the imaging routine is started. The set of images taken from events in Region 1 shows cells in which the cytoplasm has been fluorescently stained. The nucleus of these cells is visible as a darker region. The images are different for debris, which is not located in Region 1. Figure 6b shows an image of an SKBR3 cell with its corresponding measured fluorescence signals. The fluorescent image and measured PMT signals correlate well.

### Signal to Noise ratio:

Reducing the imaging scan speed will result in larger number of captured sub-images of a specific event and will, in principle, result in a better signal to noise ratio. However, no improvement in image quality for the APC labeled SKBR3 cells was observed when the image scanning speed was reduced. The limit of the imaging scan velocity is determined by the photo-bleaching rate of the dye molecules. No fluorescence could be detected with the CCD camera if an SKBR3 cell was scanned for the second time, indicating that most of the APC molecules have already been photo-destroyed after the first scan. Reducing the scan speed would, therefore, make no difference in the detected fluorescence signal and would only result in an increase of the fluorescent background. The optimal scan speed is, therefore, dependent on the individual dye characteristics and will be different for each fluorescent dye used. Therefore, to the improve signal to noise ratio it may be better to scan faster. On the other hand scanning faster then 5µm/sec when using a camera with a frame rate of 25 Hz would result in a loss of resolution since the captured images would be spaced more than 0.2µm apart. A CCD camera with higher frame rate would be needed to scan faster without losing resolution. Replacing the standard surveillance CCD camera with a more sensitive one would also allow imaging of dimly stained cells.

### Confocal Imaging:

The magnetic collection method in the Cell Tracks system does not stress or distort the cells as is commonly observed in cytospin systems using centrifugal deposition on slides. Hence the magnetically aligned cells maintain their native three-dimensional shape and volume. The device and method described herein can also be used to obtain a confocal image of cells and, therefore, to enhance the image quality by allowing a more accurate determination of the 3D-distribution of the fluorescent dye inside the cells (Corle, TR, Confocal Scanning Microscopy and Related Imaging Systems, Academic Press, NY, 1995).

### Imaging without Ni lines:

In the Cell Tracks system, Ni lines are used to align the cells and to re-locate the cells using the line number on which the cell is measured with its corresponding encoder value. However the imaging invention described herein is not dependent on the presence of Ni lines or magnetic lines and can be used on any surface on which cells or other fluorescent objects of interest are present or can be deposited. Only the encoder data in the scan direction would be needed for reconstructing the image from the stored and grabbed sub-images.

The basic requirements needed for practicing the preferred embodiments of this invention are:
1) The summed intensity profile of the sub-images in the scan direction should be as uniform as possible since this directly relates to the full image quality. In this invention, the variation is less than 6%.
2) The uniformity of the summed intensity profile should extend, in the direction perpendicular to the scan direction, to a range that is wider than the diameter of the object to be scanned.
3) The stage should be able to move with a resolution equal to or smaller than the smallest detail to be observed in a cell.

It will be apparent to those skilled in the art that the improved scanning and imaging systems of the invention is not to be limited by the foregoing descriptions of preferred embodiments, and that the preferred embodiments of the invention which incorporate these improvements, as previously described, have also been found to enable the invention to be employed in many fields and applications to diagnosis of cells and to particulate target species in general. The following Examples illustrate specific embodiments and encompass the currently known best mode of the invention.

### Example 1

For these experiments, 10 µl of fixed SKBR3 cells (50,000 cells/ml) were mixed with 290 µl of EDTA blood. Also added at the same time were 100 µl of magnetic ferrofluid coated with anti-EpCAM (magnetic particles of about 200nm size coated with proteins, streptavidin and biotinylated EpCAM antibody), an antibody specific for epithelial cells and known to be present on SKBR3 cells (cultured at Immunicon Corp., Huntingdon Valley, PA), 10 µl of allophycocyanin (APC) conjugated to monoclonal antibodies recognizing anti-cytokeratin species or cytoskeletal proteins present in epithelial cells (e.g. SKBR3 cells that are epithelium derived) and 10 µl CD45-APC/Cy7 (Caltag, Burlingame, CA) to identify leukocytes and identify leukocytes that may nonspecifically bind to cytokeratin antibody. After 15 minutes' incubation, 50 µl of this blood reaction mixture was injected into the chamber. The chamber was placed in the Cell Tracks magnet assembly and after two minutes' collection time, the feedback system was switched on and the measurements were started. In a single measurement, 40 lines with aligned cells, each 15 mm in length and with a line period of 30 µm were scanned. At a chamber height of 0.5 mm, the scanned volume represents 9 µl. The results of scanning the collected labeled SKBR3 cells with the corresponding measured immuno-fluorescent signals are shown in Figures 6a and 6b. Figure 6a shows a scatter plot of CD45-APC /Cy7 dye versus CAM5.2 antibody-APC fluorescence of SKBR3 cells in whole blood, captured and aligned by EpCAM-labeled magnetic nanoparticles. Some representative images of the measured events of Region 1, the SKBR3 cell region, and of the broad band containing the debris are shown. Region 2 is the region where the leukocytes would appear, if present and aligned along the Ni lines. Figure 6b shows an image of one SKBR3 cell with its corresponding measured fluorescence signals.

### Example 2

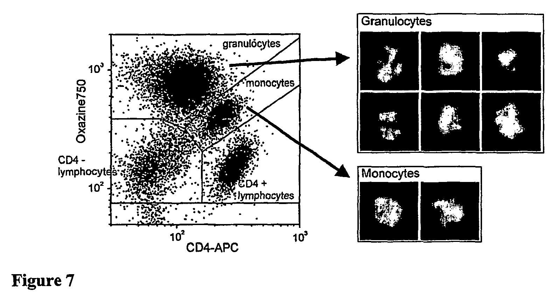

In this experiment 100 µl of EDTA anti-coagulated blood, 50 µl of ferrofluid containing 5µg of CD45-labeled ferromagnetic nanoparticles, 1.5 µl CD4-APC and 25 µl of 10⁻⁵ M Oxazine 750 perchlorate (Exciton Inc., Dayton, OH) were added. The optimum concentration of the reagents was obtained by serial titration of each of the reagents. After incubation for 15 minutes, 300 µl PBS was added and 50 µl of the blood mixture was placed into the capillary that was already placed between the magnets. The capillary has a glass bottom shaped in a way that it fits between the 70° tilted faces of the magnets. Two strips of double-sided tape with a thickness of 0.5 mm (3M Co., St. Paul, MN) were placed on the glass with spacing of 3mm to form the sidewalls of the capillary. Ni lines, about 30µm wide and about 0.2µm thick, were produced by standard photolithographic techniques on a 7740 Pyrex® glass wafer (Corning International, Germany). Wafers were cut in pieces of 4 mm x 25 mm and these were placed, with the Ni lines facing the bottom, on the double sided tape to form the top of the capillary. The inner dimensions of the capillary are height= 0.5 mm, length = 25 mm, width = 3 mm. In the measurement presented here the scan speed in the y-direction was 4 mm/sec, the chamber was scanned over 15 mm and 40 lines were scanned, resulting in a measuring time of two and a half minutes. Since the period of the lines is 30 µm, the surface scanned is 18 mm². As the height of the chamber was 0.5 mm, the scanned volume is 9 µl. For the differential white blood cell count, the addition of reagents resulted in a dilution factor of 4.77. To shorten the time that the cells need to align between lines and to assure that even the weakly magnetic labeled cells would be attracted to the upper surface, the capillary together with the magnets was placed upside down after the blood was placed into the capillary. After two minutes the capillary with the magnets was inverted again and, after approximately one minute, the feedback system was switched on and the measurement was started. To separate the emission spectra, a 660df32 band-pass filter for the APC fluorescence and a 730df100 band-pass filter (both filters from Omega Optical Co., Brattleboro, VT) for the Oxazine 750 were used. As the fluorescence intensity of Oxazine 750 stained cells is significantly greater than that of immuno-fluorescent CD4-APC labeled cells, compensation of the spectral overlap is required. A typical example of the scatter plot obtained after compensation is shown in Figure 7. Four populations are clearly visible and were identified as CD4+ lymphocytes, CD4+ monocytes, CD4- lymphocytes and neutrophilic granulocytes. The gate settings illustrated in the figure were used to determine the number of events in each gate. Total number of leukocytes measured was 12,350 and the measuring time was 2.5 minutes. To examine the distribution of the fluorescence from the detected objects, software was written to allow the user to point at the object of interest in the scatter plot. The system then moved to the location of this event and an image was taken. Surprisingly, the images clearly demonstrated that the fluorescence obtained from the Oxazine 750 staining was not derived from the nucleus but from the granules (Shapiro HM, Stephens S: Flow cytometry of DNA Content Using Oxazine 750 or Related Laser Dyes With 633 nm Excitation. Cytometry 1986; 7: 107-110). Six images obtained from the events in the granulocyte gate and two images from events in the monocyte gate are shown.

### Example 3

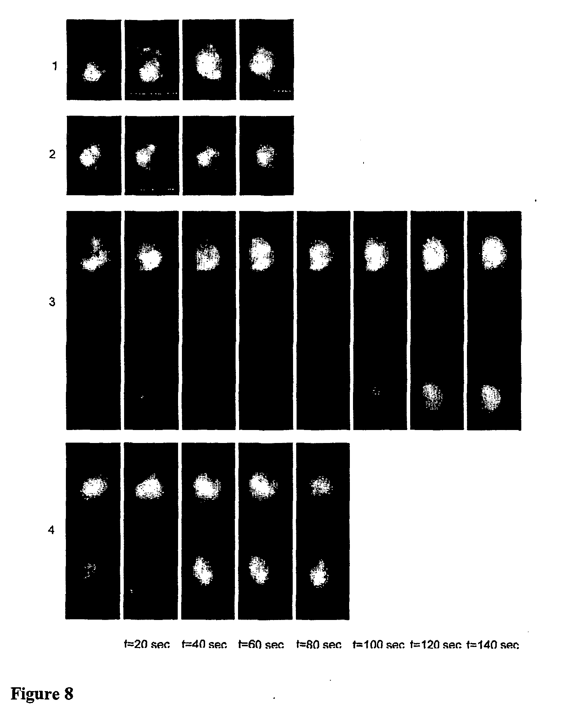

The experiment described in example 2 was repeated but time resolved images were taken with the Cell Tracks system from Oxazine 750 stained and CD45 ferrofluid captured leukocytes in whole blood. Figure 8 shows four examples of images taken at 20 seconds intervals. The distribution of the fluorescence within the cells is clearly changing between the time intervals and different cells behave differently as is obvious from the cells followed in frame 3 and 4. In both frames images from two cells in close proximity are taken and the differences in uptake and cellular distribution of the Oxazine 750 are apparent. From these examples it is obvious that the Cell Track system has a unique capability to perform functional analysis of cells as, for example, one can study the responses of cells in blood to drugs or other components in real time.

## Claims

1. An apparatus for analytical imaging of target entities, said apparatus comprising:
a. a sample chamber which includes a collection surface *for retaining said target entities in a fixed position;*
b. an arrangement of *angular* magnets *associated with said sample chamber and* capable of manipulating magnetically labeled target entities towards said collection surface *for retention*;
c. at least one light source *focally optimised with a spherically achromatic lens;*
*d. an encoder associated with said sample chamber for reading the positions of said retained target entities;*
e. a camera capable of capturing sub-images of said collected target entities, *the sub-image locations being defined by said encoder,* and
*f.* a computer capable of re-combining said sub-images to construct a complete image of said collected target entities,
*said sample chamber being movable relative to said camera.*

2. An apparatus as claimed in claim 1, in which the collection surface comprises nickel lines on a glass substrate.

3. An apparatus as claimed in claim 1 or 2, in which the light source is a laser.

4. An apparatus as claimed in claim 1 for automatically scanning magnetically and detectably labeled micron-sized objects on a planar surface whereon said objects are aligned in a linear array by magnetic means, comprising:
a. one or more laser light sources;
b. a polarized beam splitter with feedback detector;
c. a dichroic mirror assembly;
d. a focusing lens assembly;
e. a sample chamber having affixed thereto at least two parallel magnetizable lines in the x-direction thereby to form a linear array, said sample chamber being inserted into a magnet system stably affixed to said x-y stage, thereby providing means for collecting, aligning and transporting said collected labeled objects into said focused light beam in a stepwise and digitized mode;
f. means for acquiring the sequential digitized signals images emanating from said labeled objects as digitized sub-images by means of a CCD camera and one or more PMT tubes;
g. means for storing said acquired sub-images in computer memory indexed to the corresponding z-y stage position; and
h. means for merging said grabbed sub-images of said objects to reconstruct full images of said objects on said linear array.

5. An apparatus as claimed in claim 4, in which the parallel magnetic lines on the linear array are spaced about 10 µm apart.

6. An apparatus as claimed in claim 4 or 5, in which the magnetic lines are composed of a paramagnetic material.

7. An apparatus as claimed in claim 6, in which the paramagnetic material is nickel.

8. An apparatus as claimed in any of claims 4 to 7, in which the CCD camera has a frame rate commensurate with the scan speed of the stage, thereby to maintain a resolution of at least 0.2 µm.

9. A method for analytical imaging of target entities, for example cells such as tumor cells, which method comprises:
a. providing a sample suspected of containing said target entities,
b. magnetically labelling said target entities with magnetic particles, preferably colloidal magnetic particles, that are specific for said target entities, for example for the Epithelial Cell Adhesion Molecule (EpCAM),
c. magnetically manipulating *by means of of angular magnets* said target entities towards a collection surface,
d. illuminating said collected target entities *with at least one light source,* for example using multiple wavelength light sources, *wherein said at least one light source is focally optimised with a spherically achromatic lens,*
e. collecting sequential sub-images of said collected target entities, *the locations of said sub-images being defined by said encoder,* and
f. re-combining said sub-images to construct a completed image of said collected target entities.

10. A method as claimed in claim 9 for automatically scanning magnetically and detectably labeled micron-sized objects located on a planar surface whereon said objects are aligned in a linear array by magnetic means, said detectable label preferably being one or more detachable fluorescent substances each substantially specific for a detectable marker on said objects, which method comprises:
a. loading a liquid sample containing said labelled objects into a chamber bearing a plurality of parallel magnetizable lines on said planar surface, wherein said labelled target objects have a size range of 2 to about 20 µm, preferably 5 to about 15 µm, said lines being preferably composed of a paramagnetic material and preferably being about 20 to about 40 µm wide and separated by a distance of about 10 to 20 µm;
b. placing said chamber on a movable magnetic x-y stage of a microscope, thereby to generate a magnetic field in proximity of said magnetizable lines, thus aligning and positionally immobilizing said objects, if present, between adjacent magnetic lines in a linear array along the x-axis,
c. moving said stage bearing said aligned objects along the x-axis in a digitised stepwise manner into the path of a stationary focused light beam, said light beam sequentially illuminating said aligned objects at a plurality of wavelengths each characteristic for exciting a detectable label on said target and non-target objects, thereby to generate a plurality of sequential emitted signals corresponding to segmented sub-images of said objects encoded to the specific x-y positions of the said sub-images on said stage,
d. acquiring and storing the sequential segmented sub-images by means of a CCD device coupled to a frame grabber at a rate commensurate with the scanning speed of the CCD device,
e. storing said sequential sub-images in computer memory indexed to the respective x-y positions of said sub-images on said stage, and
f. merging the stored sub-images of said objects to generate a reconstructed full image of each detected object, thereby to permit locating, enumerating identifying and classifying said objects as either target or non-target objects.

## Patentansprüche

1. Vorrichtung für die analytische Abbildung von Zielentitäten, wobei die Vorrichtung folgendes umfaßt:
a. eine Probekammer, die eine Sammeloberfläche zum Festhalten der Zielentitäten in einer festen Position enthält;
b. eine Anordnung von winkelförmigen Magneten, mit der Probekammer assoziiert und in der Lage, magnetisch markierte Zielentitäten in Richtung auf die Sammeloberfläche zum Festhalten zu manipulieren;
c. mindestens eine Lichtquelle, fokal optimiert mit einer sphärisch-achromatischen Linse;
d. einen mit der Probekammer assoziierten Codierer zum Lesen der Positionen der festgehaltenen Zielentitäten;
e. eine Kamera, die in der Lage ist, Teilbilder der gesammelten Zielentitäten zu erfassen, wobei die Teilbildstellen von dem Codierer definiert werden, und
f. einen Computer, der in der Lage ist, die Teilbilder zu rekombinieren, um ein vollständiges Bild der gesammelten Zielentitäten zu konstruieren,
wobei die Probekammer relativ zu der Kamera bewegt werden kann.

2. Vorrichtung nach Anspruch 1, bei der die Sammeloberfläche Nickellinien auf einem Glassubstrat umfaßt.

3. Vorrichtung nach Anspruch 1 oder 2, wobei die Lichtquelle ein Laser ist.

4. Vorrichtung nach Anspruch 1 zum automatischen Scannen magnetisch und detektierbar markierter Objekte von Mikrometergröße auf einer planaren Oberfläche, auf der die Objekte durch magnetische Mittel in einem linearen Array ausgerichtet sind, umfassend:
a. eine oder mehrere Laserlichtquellen;
b. einen polarisierten Strahlteiler mit Rückkopplungsdetektor;
c. eine dichroitische Spiegelbaugruppe;
d. eine fokussierende Linsenbaugruppe;
e. eine Probekammer mit daran befestigt mindestens zwei parallelen magnetisierbaren Linien in der x-Richtung, um **dadurch** ein lineares Array auszubilden, wobei die Probekammer in ein stabil an dem x-y-Tisch fixiertes Magnetsystem eingeführt ist, wodurch Mittel bereitgestellt werden zum Sammeln, Ausrichten und Transportieren der gesammelten markierten Objekte in den fokussierten Lichtstrahl in einem schrittweisen und digitalisierten Modus;
f. Mittel zum Erfassen der von den markierten Objekten ausgehenden sequentiellen digitalisierten Signalbilder als digitalisierte Teilbilder mit Hilfe einer CCD-Kamera und einer oder mehreren PMT-Röhren;
g. Mittel zum Speichern der erfaßten Teilbilder im Computerspeicher, zu der entsprechenden Position des z-y-Tischs indexiert; und
h. Mittel zum Vereinigen der erfaßten Teilbilder der Objekte, um Vollbilder der Objekte auf dem linearen Array zu rekonstruieren.

5. Vorrichtung nach Anspruch 4, bei der die parallelen magnetischen Linien auf dem linearen Array etwa 10 µm voneinander beabstandet sind.

6. Vorrichtung nach Anspruch 4 oder 5, wobei die magnetischen Linien aus einem paramagnetischen Material bestehen.

7. Vorrichtung nach Anspruch 6, wobei das paramagnetische Material Nickel ist.

8. Vorrichtung nach einem der Ansprüche 4 bis 7, wobei die CCD-Kamera eine der Scangeschwindigkeit des Tischs entsprechende Einzelbildrate aufweist, um **dadurch** eine Auflösung von mindestens 0,2 µm beizubehalten.

9. Verfahren zum analytischen Abbilden von Zielentitäten, beispielsweise Zellen wie etwa Tumorzellen, wobei das Verfahren folgendes umfaßt:
a. Bereitstellen einer Probe, die vermutlich die Zielentitäten enthält,
b. magnetisches Markieren der Zielentitäten mit magnetischen Partikeln, bevorzugt colloidalen magnetischen Partikeln, die für die Zielentitäten spezifisch sind, beispielsweise für die EpCAM (Epithelial Cell Adhesion Molecule),
c. magnetisches Manipulieren der Zielentitäten mit Hilfe von winkelförmigen Magneten in Richtung auf eine Sammeloberfläche,
d. Beleuchten der gesammelten Zielentitäten mit mindestens einer Lichtquelle, beispielsweise unter Verwendung von Lichtquellen mit mehreren Wellenlängen, wobei die mindestens eine Lichtquelle fokal mit einer sphärisch-achromatischen Linse optimiert ist,
e. sequentielles Sammeln von Teilbildern der gesammelten Zielentitäten, wobei die Teilbildstellen von dem Codierer definiert werden, und
f. Rekombinieren der Teilbilder, um ein vollständiges Bild der gesammelten Zielentitäten zu konstruieren.

10. Verfahren nach Anspruch 9 zum automatischen Scannen magnetisch und detektierbar markierter Objekte von Mikrometergröße, die sich auf einer planaren Oberfläche befinden, auf der die Objekte in einem linearen Array durch magnetische Mittel ausgerichtet sind, wobei die detektierbare Markierung bevorzugt eine oder mehrere ablösbare fluoreszierende Substanzen sind, die jeweils für einen detektierbaren Marker auf den Objekten spezifisch sind, wobei das Verfahren folgendes umfaßt:
a. Laden einer flüssigen Probe, die die markierten Objekte enthält in eine Kammer, die eine oder mehrere parallele magnetisierbare Linien auf der planaren Oberfläche trägt, wobei die markierten Zielobjekte einen Größenbereich von 2 bis etwa 20 µm, bevorzugt 5 bis etwa 15 µm aufweisen, wobei die Linien bevorzugt aus einem paramagnetischen Material bestehen und bevorzugt etwa 20 bis etwa 40 µm breit sind und durch einen Abstand von etwa 10 bis 20 µm getrennt sind;
b. Plazieren der Kammer auf einem beweglichen magnetischen x-y-Tisch eines Mikroskops, um **dadurch** in der Nähe der magnetisierbaren Linien ein Magnetfeld zu erzeugen und **dadurch** die Objekte, falls sie vorliegen, zwischen benachbarten magnetischen Linien in einem linearen Array entlang der x-Achse auszurichten und positionsmäßig zu immobilisieren,
c. Bewegen des die ausgerichteten Objekte tragenden Tischs entlang der x-Achse auf digitalisierte schrittweise Art in den Weg eines stationären fokussierten Lichtstrahls, wobei der Lichtstrahl die ausgerichteten Objekte bei mehreren Wellenlängen sequentiell beleuchtet, die für das Anregen einer detektierbaren Markierung auf den Ziel- und nicht-Zielobjekten charakteristisch sind, um **dadurch** mehrere sequentiell emittierte Signale entsprechend segmentierten Teilbildern der Objekte zu erzeugen, codiert zu den spezifischen x-y-Positionen der Teilbilder auf dem Tisch,
d. Erfassen und Speichern der sequentiellen segmentierten Teilbilder mit Hilfe einer an einem Einzelbildgrabber gekoppelten CCD-Einrichtung mit einer der Scangeschwindigkeit der CCD-Einrichtung entsprechenden Rate,
e. Speichern der sequentiellen Teilbilder in einem Computerspeicher, zu den jeweiligen x-y-Positionen der Teilbilder auf dem Tisch indexiert, und
f. Vereinigen der gespeicherten Teilbilder der Objekte, um ein rekonstruiertes Vollbild jedes detektierten Objekts zu erzeugen, um **dadurch** das Lokalisieren, Numerieren, Identifizieren und Klassifizieren der Objekte als entweder Ziel- oder nicht-Zielobjekte zu gestatten.

## Revendications

1. Appareil pour l'imagerie analytique d'entités cibles, ledit appareil comprenant :
a. une chambre d'échantillon qui comprend une surface collectrice pour retenir lesdites entités cibles en position fixe;
b. un aménagement d'aimants angulaires associés à ladite chambre d'échantillon et capable de manipuler des entités cibles magnétiquement aimantées vers ladite surface collectrice pour les retenir,
c. au moins une source de lumière focalement optimisée avec une lentille sphériquement achromatique,
d. un codeur associé à ladite chambre d'échantillon pour lire les positions desdites entités cibles retenues,
e. une caméra capable de capturer des sous-images desdites entités cibles collectées, les emplacements des sous-images étant définies par ledit codeur, et
f. un ordinateur capable de recombiner lesdites sous-images pour construire une image complète desdites entités cibles collectées, ladite chambre d'échantillon pouvant être déplacée par rapport à ladite caméra.

2. Appareil selon la revendication 1, dans lequel la surface collectrice comprend des lignes de nickel sur un substrat en verre.

3. Appareil selon la revendication 1 ou 2, dans lequel la source de lumière est un laser.

4. Appareil selon la revendication 1 pour balayer automatiquement des objets de la taille du micromètre étiquetés de manière magnétique et détectable sur une surface plane sur laquelle lesdits objets sont alignés en réseau linéaire par des moyens magnétiques, comprenant :
a. une ou plusieurs sources de lumière laser;
b. un diviseur de faisceau polarisé avec un détecteur de rétroaction;
c. un assemblage de miroir dichroïque;
d. un assemblage de lentille de focalisation;
e. une chambre d'échantillon sur laquelle sont fixées au moins deux lignes parallèles magnétisables dans la direction x pour former ainsi un réseau linéaire, ladite chambre d'échantillon étant insérée dans un système d'aimant fixé de manière stable sur ledit porte-objet x-y, fournissant de la sorte des moyens pour collecter, aligner et transporter lesdits objets étiquetés collectés dans ledit faisceau de lumière focalisé en mode graduel et numérisé;
f. des moyens pour acquérir les images de signaux numérisées séquentielles émanant desdits objets étiquetés sous la forme de sous-images numérisées à l'aide d'une caméra de type CCD et un ou plusieurs tubes PMT;
g. des moyens pour stocker lesdites sous-images acquises dans une mémoire d'ordinateur indexées dans la position correspondante du porte-objet z-y; et
h. des moyens pour faire fusionner lesdites sous-images saisies desdits objets afin de reconstruire des images complétés desdits objets sur ledit réseau linéaire.

5. Appareil selon la revendication 4, dans lequel les lignes magnétiques parallèles sur le réseau linéaire sont espacées l'une de l'autre d'environ 10 µm.

6. Appareil selon la revendication 4 ou 5, dans lequel les lignes magnétiques sont composées d'un matériau paramagnétique.

7. Appareil selon la revendication 6, dans lequel le matériau paramagnétique est le nickel.

8. Appareil selon l'une quelconque des revendications 4 à 7, dans lequel la caméra de type CCD a une vitesse d'image en proportion de la vitesse de balayage du porte-image, pour maintenir ainsi une résolution d'au moins 0,2 µm.

9. Procédé pour l'imagerie analytique d'entités cibles, par exemple des cellules telles que des cellules tumorales, lequel procédé comprend :
a. la mise en oeuvre d'un échantillon suspecté de contenir lesdites entités cibles,
b. l'étiquetage magnétique desdites entités cibles avec des particules magnétiques, de préférence des particules magnétiques colloïdales, qui sont spécifiques pour lesdites entités cibles, par exemple pour la molécule d'adhérence aux cellules épithéliales (EpCAM),
c. la manipulation magnétique à l'aide d'aimants angulaires desdites entités cibles vers une surface collectrice,
d. l'éclairage desdites entités cibles collectées avec au moins une source de lumière, par exemple en utilisant des sources de lumière à longueurs d'ondes multiples, dans lequel ladite au moins une source de lumière est focalement optimisée avec une lentille sphériquement achromatique,
e. la collecte de sous-images séquentielles desdites entités cibles collectées, les emplacements desdites sous-images étant définies par ledit codeur, et
f. la recombinaison desdites sous-images pour construire une image complétée desdites entités cibles collectées.

10. Procédé selon la revendication 9 pour balayer automatiquement des objets de la taille du micromètre étiquetés de manière magnétique et détectable disposés sur une surface plane, sur laquelle lesdits objets sont alignés en réseau linéaire par des moyens magnétiques, ladite étiquette détectable étant de préférence formée d'une ou plusieurs substances fluorescentes détachables, chacune étant sensiblement spécifique pour un marqueur détectable sur lesdits objets, lequel procédé comprend :
a. le chargement d'un échantillon de liquide contenant lesdits objets étiquetés dans une chambre portant une pluralité de lignes parallèles magnétisables sur ladite surface plane, lesdits objets cibles étiquetés ayant une plage de tailles de 2 à environ 20 µm, de préférence de 5 à environ 15 µm, lesdites lignes étant de préférence composées d'un matériau paramagnétique et étant de préférence d'une largeur d'environ 20 à environ 40 µm de large et séparées d'une distance d'environ 10 à 20 µm;
b. le placement de ladite chambre sur un porte-objet magnétique x-y déplaçable d'un microscope, pour générer ainsi un champ magnétique à proximité desdites lignes magnétisables, en alignant par suite et en immobilisant de manière positionnable lesdits objets, s'ils sont présents, entre des lignes magnétiques adjacentes d'un réseau linéaire le long de l'axe x,
c. le déplacement dudit porte-objet portant lesdits objets alignés le long de l'axe x de manière graduelle numérisée dans le trajet d'un faisceau lumineux focalisé de manière stationnaire, ledit faisceau lumineux éclairant séquentiellement lesdits objets alignés à une pluralité de longueurs d'onde, chaque caractéristique excitant une étiquette détectable sur lesdits objets ciblés ou non, pour générer de la sorte une pluralité de signaux séquentiels émis correspondant aux sous-images segmentées desdits objets codés dans les positions spécifiques x-y desdites sous-images sur ledit porte-objet,
d. l'acquisition et le stockage des sous-images segmentées séquentielles à l'aide d'un dispositif CCD couplé à un dispositif d'enregistrement d'images à une vitesse en proportion de la vitesse de balayage du dispositif CCD,
e. le stockage desdites sous-images séquentielles dans une mémoire d'ordinateur indexées dans lesdites positions respectives x-y desdites sous-images sur ledit porte-objet, et
f. la fusion des sous-images stockées desdits objets pour générer une image reconstruite complète de chaque objet détecté, ce qui permet de localiser, d'énumérer, d'identifier et de classer lesdits objets comme objets ciblés ou non ciblés.
